(19) Europäisches Patentamt
European Patent Office
Office européen des brevets

(11) **EP 2 157 366 A1**

(12) **EUROPEAN PATENT APPLICATION**

(43) Date of publication:
**24.02.2010 Bulletin 2010/08**

(51) Int Cl.:
***F21V 8/00*** *(2006.01)*

(21) Application number: **08162719.2**

(22) Date of filing: **21.08.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Koninklijke Philips Electronics N.V.**
**5621 BA Eindhoven (NL)**

(72) Inventor: **The designation of the inventor has not yet been filed**

(74) Representative: **Damen, Daniel Martijn**
**Philips**
**Intellectual Property & Standards**
**P.O. Box 220**
**5600 AE Eindhoven (NL)**

(54) **Light guide assembly**

(57)    A light guide assembly (1) which is suitable to be arranged at an outside of a product in order to act as a light emitting outer surface of the product when used in combination with at least one light source comprises a light guide (11) for transporting light on the basis of the total internal reflection phenomenon; a cladding layer (15) having an index of refraction which is lower than an index of refraction of the light guide (11), which serves for ensuring that a desired light effect is not disturbed by tiny scratches or contaminations at a surface (14) of the light guide (11); and a cover layer (17) for providing mechanical support. The light guide assembly (1) may further comprise a finish layer (18), which is an outer layer of the assembly (1), and which is adapted to provide a desired look-and-feel to the assembly (1).

Fig. 1

EP 2 157 366 A1

**Description**

FIELD OF THE INVENTION

The present invention relates to a light guide assembly which is suitable to be arranged at an outside of a product in order to act as a light emitting outer surface of the product when used in combination with at least one light source such as a light emitting diode, comprising a light guide, i.e. a piece of material which is permeable to light, and which is adapted to receiving and transporting light on the basis of reflection of the light against surfaces of the piece of material from the inside of the piece of material.

BACKGROUND OF THE INVENTION

In the field of consumer products, especially electronic products, styling and design play an important role besides the functionality of the products. Current products rely very strongly on static product finishes, sometimes with small displays integrated, but in many cases, it is desirable to have a light emitting surface in the products, wherein this surface may be adaptable, i.e. may have an electronically changeable color.

In order to realize an adaptable light emitting surface, a technology has been developed, according to which a thin and flexible light emitting surface is created by combining a thin light guide with thin light emitting diodes (LEDs) located close to edges of the light guide, wherein the light guide is adapted to act as an optical fiber from which light cannot escape. In particular, during operation, the light emitted by the LEDs is coupled into the light guide, and inside the light guide, the light travels by means of a well-known physical principle known as total internal reflection.

For the purpose of obtaining a surface which emits light, the light needs to be coupled out in a uniform manner. To this end, a pattern of out-coupling dots is arranged on a surface of the light guide, wherein the dots may be realized in any suitable manner, for example, as sand-blasted indentations of the surface, or as dots of paint applied by silk screening. In general, in order to obtain a uniform illumination, it is true that the further away from the LEDs, the larger the size of the dots has to be, since there is less light at a location further away from the LEDs than at a location closer to the LEDs.

The light guides can be very thin, wherein their thickness may be 1 mm or less. This makes the light guides flexible and moldable, and it is possible to make arbitrary shapes on the basis of injection molding.

The above-described known technology of realizing a light emitting surface has a lot of potential, but also has some severe drawbacks that hamper a widespread application. These drawbacks include the factors as described in the following.

A first drawback is related to a sensitivity to contamination and scratches. There are few materials that are suitable for being used as a light guide. Examples of such materials are Perspex and polycarbonate. However, both plastics are not very scratch resistant, and every scratch will be visible since at the location of the scratch, light will leak from the light guide. For the same reason, fingerprints will be clearly visible.

Another drawback is related to the fact that light guides comprise transparent material with a glossy appearance. The look-and-feel of these materials is poor, and difficult to adapt.

Furthermore, light guides can hardly be used as a casing giving mechanical strength to products in view of the fact that it is usual and practical for the light guides to be plastic elements which are very thin.

SUMMARY OF THE INVENTION

It is an object of the present invention to remove at least one of the above-mentioned drawbacks which are related to the known technology of realizing a light emitting surface. In particular, this object is achieved by providing a light guide assembly comprising not only a light guide, but also a cladding layer having an index of refraction which is lower than an index of refraction of the light guide, wherein at least one surface of the light guide is at least partially covered by the cladding layer; and a cover layer which is arranged at one side of an assembly of the light guide and the cladding layer, and which serves for providing mechanical support to both the light guide and the cladding layer.

According to the present invention, a light guide assembly is provided, and in fact, the present invention resides in combining a light guide with several layers.

In the first place, a layer which is indicated as cladding layer is provided, wherein the cladding layer serves for ensuring that tiny scratches and/or contaminations do not show. To this end, an index of refraction of the cladding layer is lower than an index of refraction of the light guide. When the cladding layer is applied, it is ensured that light traveling through the light guide will stay inside the light guide and cannot escape, even at the locations where scratches and contaminations are present, as due to the difference of indices of refraction, only reflection of the light will take place. Preferably, the difference of indices of refraction is 0.15 or more in order to realize this effect in practice.

In the second place, a layer which is indicated as cover layer is provided, wherein the cover layer serves for providing mechanical support to both the light guide and the cladding layer. For example, the cover layer may be laminated to the cladding layer, wherein a rigid construction is obtained with the cover layer providing most of the mechanical strength.

By having the cladding layer and the cover layer, it is achieved that a light guide assembly is obtained which does not have the drawback of distortion of the light pattern to be realized by the light guide when scratches and/or contaminations are present, and which does not have the drawback of lack of mechanical strength. The present invention also offers a possibility of removing the drawback of not being capable of realizing a desired look-and-feel, as the light guide assembly may further comprise a finish layer which is arranged at one side of the assembly, and which is an outer layer of the assembly. For example, the finish layer may comprise a colored rubber material for good grip, or may comprise a metallic paint. The finish layer does not necessarily need to be a continuous layer, and may be interrupted at suitable places.

In respect of the cover layer and the finish layer it is noted, that these layers may be locally transparent or semi-transparent, or locally opaque. Transparent or opaque regions may have the shape of a logo, for example.

In order to have a desired pattern of lighted areas when one or more light sources are applied to emit light to the light guide, it is advantageous to have means for allowing light to escape from the light guide at predetermined places. Within the scope of the present invention, there are many ways in which these means may be realized. A number of possibilities is described in the following.

According to a first possibility, the surface of the light guide may be provided with irregularities such as indentations. When a light ray reaches the surface of the light guide at the place of an irregularity, the angle at which the light ray meets the surface is different than at a smooth portion of the surface, wherein the angle may be so large that the light ray is capable of traveling through the surface instead of being totally reflected. In this way, it is possible for light rays to escape from the light guide at the places where the irregularities are present.

According to a second possibility, the light guide assembly further comprises pieces of a transparent material which are contacting the light guide and extending from the light guide to an outer side of the assembly, wherein the layer(s) covering the light guide at the side where the pieces of the transparent material are present comprise(s) holes for accommodating these pieces. Preferably, the index of refraction of the transparent material is equal to or larger than the index of refraction of the light guide. At places where the pieces of transparent material are present, the process of total internal reflection is interrupted, and light that is reaching these pieces does not return to the light guide, but travels further through these pieces and exits through a free end thereof.

According to a third possibility, the light guide assembly further comprises dots of a material which is in close contact with the light guide. The dots of material have a function which is similar to the function of the above-described pieces of material in the sense that the dots are suitable for allowing light to escape from the light guide. The dots may comprise a scattering material. In general, the material of the dots may differ from the material of the light guide and the layers of the assembly, but it is also possible that the dots are part of one of the light guide and a layer which is arranged on a surface of the light guide, in which case the manufacturing process of the light guide assembly is facilitated.

Besides the possibilities as mentioned in the foregoing, many more possibilities for realizing the means for allowing light to escape from the light guide at predetermined places are feasible within the scope of the present invention. For example, the light guide may further comprise diffraction gratings arranged at predetermined places, or dots of phosphors, or the cladding layer may be embedded with diffuse scattering particles. In respect of an application of dots of phosphors, it is noted that such dots are capable of converting the light traveling inside the light guide into a different color. For example, LEDs emitting blue light may be used, wherein it is achieved that the moment this light hits a phosphor, it is converted into white, yellow, or another color depending on the phosphor composition.

In an embodiment of the light guide assembly in which it is desired to have the means for allowing light to escape from the light guide at another side of the assembly than a side which is intended to be visible when the assembly is incorporated in a product, a mirror may be applied, which is arranged such that a reflecting side of the mirror faces the means for allowing light to escape from the light guide at predetermined places.

In particular cases, it may be desirable to have an embodiment of the light guide assembly which is capable of (locally) producing a second light effect. By having such an embodiment, it is possible to provide a product with a light emitting skin and besides that, with means to locally generate a second light effect. In such a case, the light emitting skin conveys a certain atmosphere, whereas the second light effect could be functional lighting conveying information such as on/off or charged/discharged. In a practical embodiment, the light guide may be provided with through-holes, wherein LEDs may be arranged at the positions of these through-holes, and light emitted by the LEDs is allowed to travel directly through the holes and the layer(s) covering the holes. It is also possible to have a second light guide arranged beside the other light guide of the assembly; and means for allowing light to escape from the second light guide at a surface facing the other light guide. In both cases, two different light patterns at two different levels may be realized.

In order to realize a lighting effect as intended, it is desirable to take measures for coupling light from LEDs into the light guide in such a way that as little as possible light unintentionally leaks into the cladding layer. In many cases, a LED is a standard LED which emits light in a more or less Lambertian pattern, implying that a semi-angle of a cone into which light is emitted is approximately 90° in air. In case an end of the light guide is flat and the LED is positioned close to this end, some of the light emitted by the LED and entering the light guide will be able to penetrate the cladding layer, since it will not fulfill the angle requirements for achieving the total internal reflection effect. One way to prevent this from happening is collimating the light of the LEDs first by using a suitable collimator, which may be part of the light guide. Another way to prevent this from happening is applying a layer for absorbing light, which is arranged at a portion of the light guide, so that light is forced to stay inside this portion of the light guide, irrespective of the angle at which the surface of the light guide is hit. Actually, light rays that will not be able to fulfill the requirements for total internal reflection will reach the absorbing layer and will be absorbed.

An embodiment of the light guide assembly offering many design possibilities is an embodiment in which the cover layer is decoupled from the light guide at predetermined places, wherein space is present between the light guide and the cover layer at those places. In this embodiment, the light guide is supported by the cover layer only at other places, namely the places where the light guide is coupled to the cover layer, wherein the cladding layer may be arranged in between. The light guide may have a skeleton-like shape with bifurcations etc.

In general, within the scope of the present invention, any suitable shape of the light guide may be realized. It is clear from the foregoing that a large variety of embodiments of the light guide assembly are possible within the scope of the present invention, wherein it is possible to choose the shape of the assembly such that it is suitable to be applied as a housing component of a any type of product. For example, the assembly may have any curved shape as desired.

In short, the present invention may be denoted as a method to embed light guides in a stack of layers that preserve the light guiding properties of the light guide and at the same time allow for the application of an appropriate surface finish for obtaining mechanical strength and support, wherein it is possible to have another surface finish for obtaining a desired look-and-feel. The above-described and other aspects of the present invention will be apparent from and elucidated with reference to the following description of various embodiments of a light guide assembly according to the present invention.

BRIEF DESCRIPTION OF THE DRAWINGS

The present invention will now be explained in greater detail with reference to the figures, in which equal or similar parts are indicated by the same reference signs, and in which:

    figure 1 diagrammatically shows a sectional view of a portion of a first embodiment of a light guide assembly according to the present invention;
    figure 2 diagrammatically shows a sectional view of a portion of a second embodiment of a light guide assembly according to the present invention;
    figure 3 diagrammatically shows a sectional view of a portion of a third embodiment of a light guide assembly according to the present invention;
    figure 4 diagrammatically shows a sectional view of a portion of a fourth embodiment of a light guide assembly according to the present invention and a LED;
    figure 5 diagrammatically shows a sectional view of a portion of a fifth embodiment of a light guide assembly according to the present invention;
    figure 6 diagrammatically shows a sectional view of a portion of a sixth embodiment of a light guide assembly according to the present invention;
    figure 7 diagrammatically shows a sectional view of a portion of a seventh embodiment of a light guide assembly according to the present invention;
    figure 8 diagrammatically shows a sectional view of a portion of a eighth embodiment of a light guide assembly according to the present invention and a LED;
    figure 9 diagrammatically shows a sectional view of a portion of a ninth embodiment of a light guide assembly according to the present invention and a LED; and
    figure 10 diagrammatically shows a perspective view of a tenth embodiment of a light guide assembly according to the present invention.

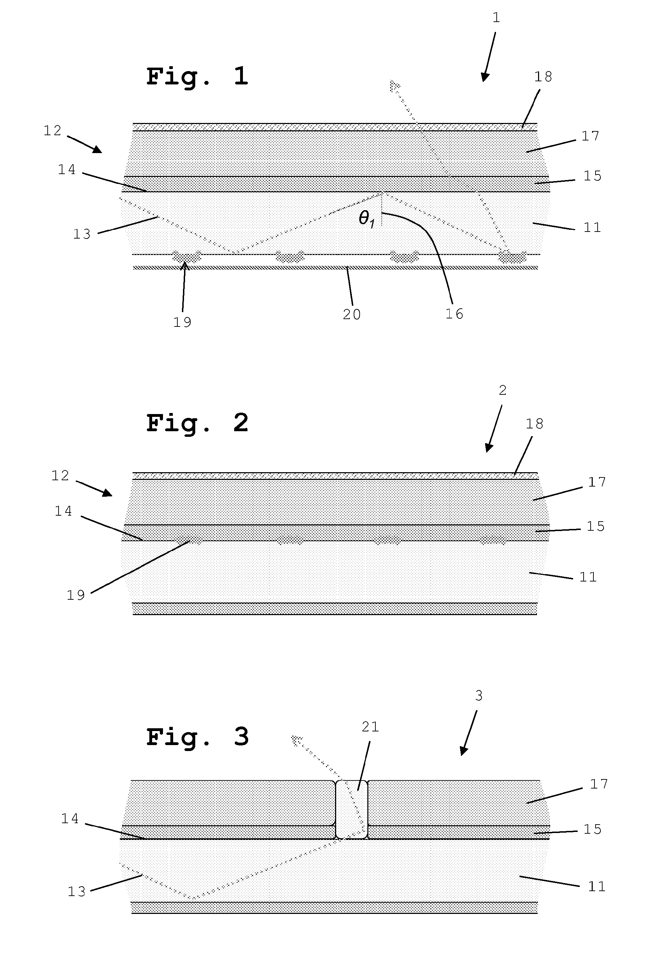

In respect of figures 1, 3-9 it is noted that dotted arrows are used as a diagrammatic representation of light rays.

DETAILED DESCRIPTION OF EMBODIMENTS

Figure 1 diagrammatically shows a portion of a first embodiment 1 of a light guide assembly according to the present invention, which will hereinafter be referred to as first light guide assembly 1.

The first light guide assembly 1 comprises a light guide 11 and a stack of layers 12, which is arranged at one side of the light guide 11, which will hereinafter be referred to as front side. The light guide 11 serves for receiving light from one or more suitable light sources (not shown in figure 1), and is adapted to allow the light to travel in a direction from one end of the light guide 11 to another, wherein the light rays 13 are continually reflected by surfaces 14 of the light guide 11. In particular, a process that is known as total internal reflection takes place, wherein the light rays 13 cannot escape from the light guide 11 as long as an angle at which the light ray 13 hits the surface 14 of the light guide 11 is smaller than a certain minimum angle with respect to the surface 14. The value of the minimum angle is dependent on the indices of refraction of the light guide 11 and its immediate surroundings, which, in the case of the first light guide assembly 1, are constituted by a layer 15 contacting the light guide 11.

The layer 15 contacting the light guide 11 will be referred to as cladding layer 15, and serves for ensuring that the light stays inside the light guide 11, even when contaminations like fingerprints and/or tiny scratches are present on the surface of the cladding layer 15 opposite to the surface 14 of the light guide 11. To this end, the index of refraction of the cladding layer 15 is smaller than the index of refraction of the light guide 11. Preferably, the difference between the indices of refraction is at least 0.15.

As long as the light rays 13 travel inside the light guide 11 at angles $\theta_1$ with respect to a normal 16 to the surface 14 of the light guide 11 which are equal to or larger than a critical angle $\theta_c$, the light rays 13 cannot leak into the cladding layer 15. For sake of completeness, it is noted that the critical angle $\theta_c$ is found on the basis of the following formula:

$$\theta_c = \arcsin(n_2/n_1)$$

wherein $n_1$ represents the refractive index of the light guide 11, and $n_2$ represents the refractive index of the cladding layer 15.

Examples of suitable materials for the light guide 11 are PolyMethylMethacrylate (PMMA, $n_1$ = 1.49), PolyCarbonate (PC, $n_1$ = 1.59), PolyStyrene (PS), and Cyclic-Olefin-Copolymer (COC), and examples of suitable materials for the cladding layer 15 are a silicone rubber, a sol-gel hydrolysis polymer, aerogels, fluorinated hydrocarbon polymers, and magnesium-oxyfluoride nanoparticles.

In the first light guide assembly 1, a cover layer 17 is arranged on top of the cladding layer 15, and is laminated to the cladding layer 15. The cover layer 17 serves for providing the light guide assembly 11 with a required mechanical strength, and is made of any suitable material for fulfilling this function, for example, a plastic such as Acrylonitrile-Butadiene-Styrene (ABS), Poly-Ethylene (PE) or PolyPropylene (PP). During a manufacturing process of the light guide assembly 1, by performing a step of applying the cover layer 17, a construction in which the cover layer 17 provides most of the mechanical strength is obtained, wherein this construction may be rigid.

Furthermore, in the first light guide assembly 1, a finish layer 18 is arranged on top of the cover layer 17. This finish layer 18 serves for providing a required look-and-feel, which is determined by the nature of a product (not shown) in which the light guide assembly 1 is to be used. For example, the finish layer 18 may comprise colored rubber material for good grip. Both the cover layer 17 and the finish layer 18 can be locally transparent or semi-transparent, or locally opaque.

For the purpose of extracting light from the light guide 11, a pattern of out-coupling dots 19 is arranged at the other side of the light guide 11 than the side where the stack of layers 12 is present. In the following, this other side of the light guide 11 will be referred to as back side. The out-coupling dots 19 are in close contact with the light guide 11, wherein they are having an interrupting function on the surface 14 of the light guide 11, such that they are capable of locally changing the orientation of the normal 16 to the surface 14. By having another orientation of the normal 16 at the out-coupling dots 19, it is automatically achieved that the angle $\theta_1$ at which light rays 13 are approaching an out-coupling dot 19 meets the criterion of being smaller than the critical angle $\theta_c$, so that these light rays 13 are allowed to escape from the light guide 11.

In the first light guide assembly 1, the side of the light guide 11 where the out-coupling dots 19 are arranged is not the side which is intended to be viewed by a user when the light guide assembly 1 is incorporated in a product, as this is not the side where the finish layer 18 is present. In order to ensure that the light rays 13 which are coupled out of the light guide 11 are directed towards the finish layer 18, a mirror 20 is applied, which is arranged at the side of the light guide 11 where the out-coupling dots 19 are present, with its reflecting side facing these out-coupling dots 19.

The first light guide assembly 1 is intended to be incorporated in a product, wherein light sources such as LEDs should be arranged at one or more edges of the light guide 11, so that the light guide assembly 1 may serve as a light emitting outer surface of the product. In particular, when the light sources are operated, a user of the product in which the light guide assembly 1 is incorporated experiences the out-coupling dots 19 as light points at the surface. Furthermore, the cladding layer 15 prevents scratches and contaminations from showing, the cover layer 17 provides mechanical strength and support, and the finish layer 18 provides a desired look-and-feel. All in all, by applying the light guide assembly 1, a light emitting outer surface which meets both aesthetic requirements and functional requirements is realized. It is noted that the combination of light guide assembly 1 and light sources may be chosen such that it is possible to have a light emitting adaptable surface, i.e. a surface with an electronically changeable color. The light guide assembly 1 is suitable to be used in various fields, including the fields of consumer electronics, domestic appliances, health care and lighting solutions.

In the following, alternative embodiments of the light guide assembly 1 according to the present invention will be described on the basis of figures 2-10.

Figure 2 diagrammatically shows a portion of a second embodiment 2 of a light guide assembly according to the present invention, which will hereinafter be referred to as second light guide assembly 2. In the second light guide assembly 2, the out-coupling dots 19 are arranged at the front side of the light guide 11, i.e. between the light guide 11 and the cladding layer 15. Also, in this case, the use of a mirror 20 would be advantageous. Furthermore, it is advantageous if a cladding layer 15 is used to cover the back side of the light guide 11 in order to prevent light rays 13 from escaping at that side.

Figure 3 diagrammatically shows a portion of a third embodiment 3 of a light guide assembly according to the present invention, which will hereinafter be referred to as third light guide assembly 3. The third light guide assembly 3 does not comprise the out-coupling dots 19 as shown in figures 1 and 2. Instead, for the purpose of out-coupling light from the light guide 11, plugs 21 of a transparent material are used. The plugs 21 are arranged such as to contact the front side of the light guide 11, wherein the cladding layer 15 and the cover layer 17 are provided with holes for accommodating the plugs 21.

Advantageously, the index of refraction of the material of the plugs 21 is equal to or larger than the index of refraction of the light guide 11, so that it is achieved that the critical angle $\theta_c$ is locally increased at the positions where the plugs 21 are present, such that practically no total internal reflection takes place at the positions where the plugs 21 are present, and light rays 13 which would normally be reflected on the surface 14 of the light guide 11 are allowed to escape there. In other words, in that way, it is achieved that light can leak through the plugs 21 in the cover layer 17. The plugs 21 can have any desired shape, for example, a donut shape. By using the plugs 21, any desired pattern of light points can be obtained.

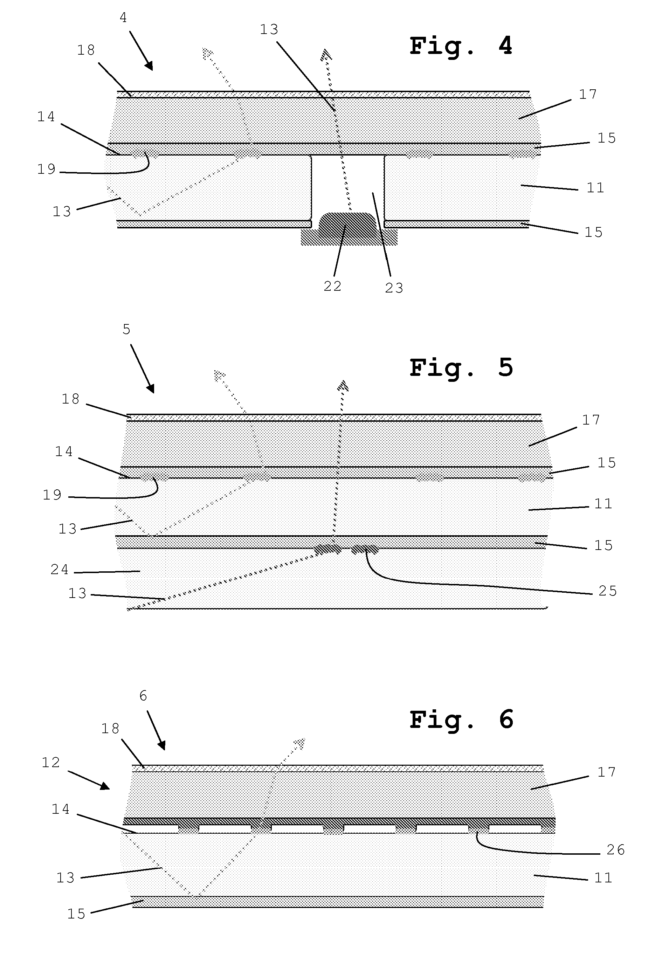

Figure 4 diagrammatically shows a portion of a fourth embodiment 4 of a light guide assembly according to the present invention, which will hereinafter be referred to as fourth light guide assembly 4, and a LED 22. The fourth light guide assembly 4 is similar to the second light guide assembly 2, except for the fact that the fourth light guide assembly 4 is adapted to producing a second light effect. In particular, this assembly 4 is adapted to provide a product with a light emitting skin and also locally generate a second light effect. To this end, the light guide 11 is provided with through-holes 23, which may be circular holes 23, wherein LEDs 22 are positioned at these holes 23, at the back side of the light guide 11. In this way, it is achieved that when the fourth light guide assembly 4 and the LEDs 22 are applied, and suitable light sources (which may also be LEDs) are arranged at edges of the light guide 11, a first light effect is realized on the basis of the fact that the pattern of out-coupling dots 19 is visible, and a second light effect is realized on the basis of the fact that the pattern of through-holes 23 and the associated LEDs 22 is visible. As the out-coupling dots 19 are arranged at the front side of the light guide 11 and the LEDs 22 are arranged at the back side of the light guide 11, the different patterns are at different levels.

Another way of creating a second light effect is illustrated in figure 5, which diagrammatically shows a portion of a fifth embodiment 5 of a light guide assembly according to the present invention, which will hereinafter be referred to as fifth light guide assembly 5. Like the fourth light guide assembly 4, the fifth light guide assembly 5 is similar to the second light guide assembly 2, except for the fact that the fifth light guide assembly 5 is adapted to producing a second light effect. To this end, a second light guide 24 is arranged at the back side of the first light guide 11, wherein dots 25 for out-coupling light from the second light guide 24 are arranged between the second light guide 24 and the cladding layer 15 covering the back side of the first light guide 11. Hence, the fifth light guide assembly 5 is adapted to showing two patterns of dots 19, 25, wherein these patterns are at different levels.

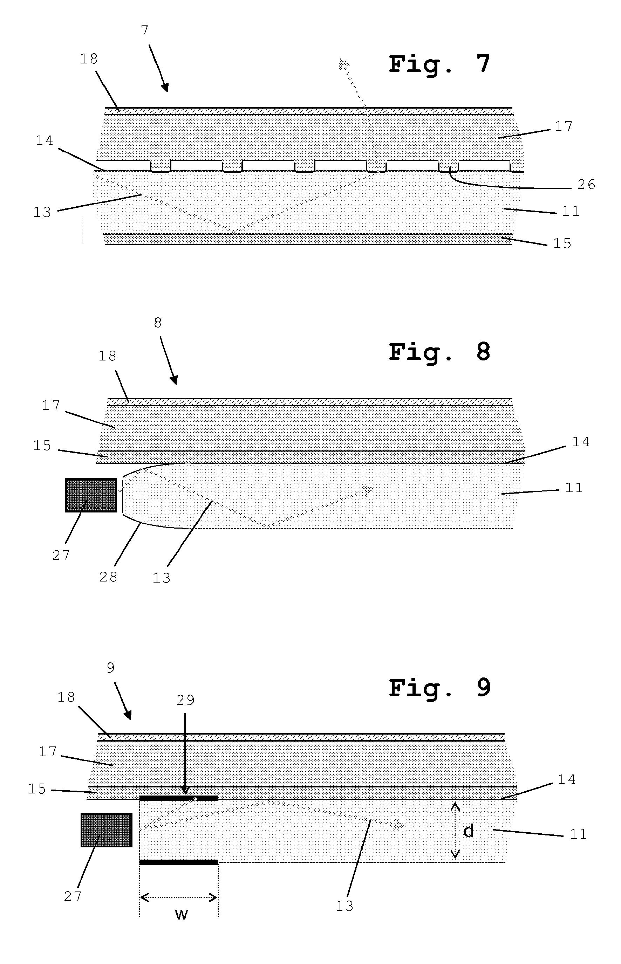

Figure 6 diagrammatically shows a portion of a sixth embodiment 6 of a light guide assembly according to the present invention. In the sixth light guide assembly 6, the stack of layers 12 which is present at the front side of the light guide 11 is mechanically connected to the light guide 11 by means of dots 26 of a material that is in close contact with the light guide 11, and preferably, has scattering properties. This material can be a material that differs from the other materials used in the light guide assembly 6. Alternatively, the dots 26 may be part of the cover layer 17, wherein the cover layer 17 contacts the light guide 11 through the dots 26 as illustrated in figure 7, which diagrammatically shows a portion of a seventh embodiment 7 of a light guide assembly according to the present invention. According to yet another option, which is not illustrated in any of the figures, the dots 26 may be part of the light guide 11.

Advantageously, in order to have an optimal light effect, measures may be taken for coupling light from light sources into the light guide 11 in such a way that as little as possible light unintentionally leaks into the cladding layer 15. When the light sources comprise LEDs, the fact that most LEDs are adapted to emitting light into a cone having a semi-angle of about 90° in air needs to be taken into account. In case an edge of the light guide 11 where a LED is positioned is flat, and the LED is arranged close to the edge, some of the light emitted by the LED and entering the light guide 11 will be able to penetrate the cladding layer 15, since the conditions for total internal reflection are not fulfilled. In particular, the angle $\theta_1$ of this light with respect to the normal 16 to the surface 14 of the light guide 11 is smaller than the critical angle $\theta_c$.

A first method for preventing light from entering the cladding layer 15 is illustrated in figure 8, which diagrammatically shows a portion of an eighth embodiment 8 of a light guide assembly according to the present invention and a LED 27 for emitting the light, which is arranged at an edge of the light guide 11 of the light guide assembly 8. According to this first method, the light emitted by the LED 27 is collimated first by applying a collimator 28. It is noted that the collimator 28 can be integrated with the light guide 11, as is the case in the example as shown in figure 8.

A second method for preventing light from entering the cladding layer 15 is illustrated in figure 9, which diagrammatically shows a portion of an ninth embodiment 9 of a light guide assembly according to the present invention and a LED 27 for emitting the light, which is arranged at an edge of the light guide 11 of the light guide assembly 9. According to this second method, light rays 13 entering the light guide 11 at angles $\theta_1$ with respect to the normal 16 to the surface 14 of the light guide 11 which are smaller than the critical angle $\theta_c$ are intercepted by an absorbing layer 29 before they can reach the cladding layer 15. To this end, the absorbing layer 29 is arranged in close contact to the light guide 11.

The absorbing layer 29 does not need to very wide, so that the light-emitting function of the light guide assembly 9 is only affected along a small width of the light guide assembly 9. In particular, the following formula is applicable to the width of the absorbing layer 29:

$$ w \geq d \cdot \tan(\theta_c) $$

wherein w represents the width of the absorbing layer 29, and d represents the thickness of the light guide 11. For example, in case the thickness of the light guide 11 is 1 mm, the refractive index of the light guide 11 is 1.5, and the refractive index of the cladding layer 15 is 1.4, the critical angle $\theta_c$ is 69°, and the minimum width is only 2.6 mm.

The width of the absorbing layer 29 can be shortened by not filling the absorbing region with a plastic material but with air, i.e. by positioning the LED 27 at some distance from the light guide 11. In such a case, with the numbers of the above example, the width of the absorbing layer 29 may be as small as 1.6 mm.

Besides the above-described methods for preventing light emitted by the LED 27 from entering the cladding layer 15, other methods are feasible, including a method which boils down to choosing an appropriate type of LED 27, i.e. a LED 27 emitting light into a cone having a restricted semi-angle. The largest angle in air for a light ray 13 emitted by the LED 27 that will not penetrate the cladding layer 15 equals arcsin($n_1 \cdot$ sin(90° - $\theta_c$)). In the above example, the largest angle is 33°, and when a LED 27 that is adapted to emit light that is confined to this maximum angle is chosen, the effect of light reaching the cladding layer 15 does not occur without the need of any modification of the light guide assembly 9.

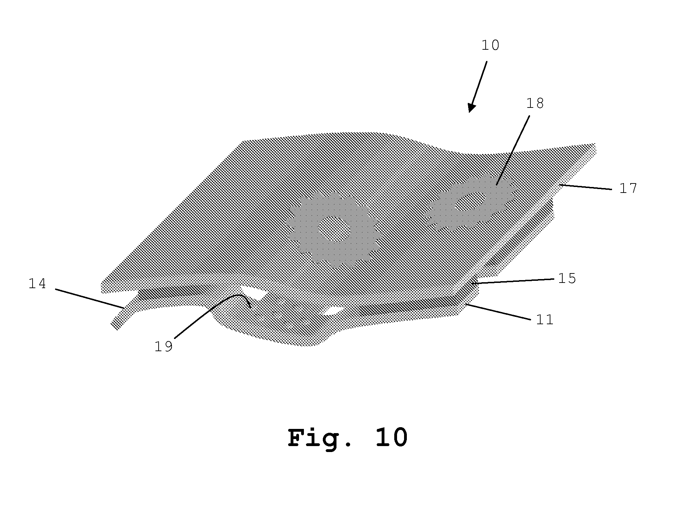

Figure 10 diagrammatically shows a tenth embodiment 10 of a light guide assembly according to the present invention. The light guide 11 of this light guide assembly 10 is supported at some places by the cover layer 17, and is decoupled from the cover layer 17 at other places. At the places where there is a coupling between the light guide 11 and the cover layer 17, the light guide 11 and the cover layer 17 are attached to each other with a cladding layer 15 in between. The light guide 11 may have any shape as desired, for example, a skeleton-like shape with bifurcations.

With the light guide assembly 1, 2, 3, 4, 5, 6, 7, 8, 9, 10 according to the present invention, it is possible to realize light emitting surfaces with any desired light effect and with an appropriate mechanical strength. Furthermore, the light guide assembly 1, 2, 3, 4, 5, 6, 7, 8, 9, 10 may comprise any suitable finish layer 18. Other notable aspects of combining a light guide 11 with layers 15, 17, 18 as described include an easy manufacturing process, a possibility of low power solutions, basically by using LEDs 22, 27, and the fact that the application of the light guide assembly 1, 2, 3, 4, 5, 6, 7, 8, 9, 10 is not limited to flat surfaces.

It will be clear to a person skilled in the art that the scope of the present invention is not limited to the examples discussed in the foregoing, but that several amendments and modifications thereof are possible without deviating from the scope of the present invention as defined in the attached claims. While the present invention has been illustrated and described in detail in the figures and the description, such illustration and description are to be considered illustrative or exemplary only, and not restrictive. The present invention is not limited to the disclosed embodiments.

Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the present invention.

In the foregoing, a light guide assembly 1, 2, 3, 4, 5, 6, 7, 8, 9, 10 has been disclosed, which is suitable to be arranged at an outside of a product in order to act as a light emitting outer surface of the product when used in combination with at least one light source such as a LED 22, 27 comprises a light guide 11 for transporting light on the basis of the total internal reflection phenomenon; a cladding layer 15 having an index of refraction which is lower than an index of refraction of the light guide 11, which serves for ensuring that a light effect to be obtained by using the light guide assembly 1, 2, 3, 4, 5, 6, 7, 8, 9, 10 is not disturbed by tiny scratches or contaminations at a surface 14 of the light guide 11; and a cover layer 17 for providing mechanical support. The cladding layer 15 is arranged such as to at least partially cover at least one surface 14 of the light guide 11. Besides the cladding layer 15 and the cover layer 17, the light guide assembly 1, 2, 3, 4, 5, 6, 7, 8, 9, 10 may comprise a finish layer 18, which is an outer layer of the assembly 1, 2, 3, 4, 5, 6, 7, 8, 9, 10, and which is adapted to provide a desired look-and-feel to the assembly 1, 2, 3, 4, 5, 6, 7, 8, 9, 10. Furthermore, the light effect to be obtained may actually be obtained by using means 19, 21, 26 for allowing light to escape from the light guide 11 at predetermined places.

## Claims

1. Light guide assembly (1, 2, 3, 4, 5, 6, 7, 8, 9, 10) which is suitable to be arranged at an outside of a product in order to act as a light emitting outer surface of the product when used in combination with at least one light source such as a light emitting diode (22, 27), comprising:

   - a light guide (11), i.e. a piece of material which is permeable to light, and which is adapted to receiving and transporting light on the basis of reflection of the light against surfaces (14) of the piece of material from the inside of the piece of material;
   - a cladding layer (15) having an index of refraction which is lower than an index of refraction of the light guide (11), wherein at least one surface (14) of the light guide (11) is at least partially covered by the cladding layer (15); and
   - a cover layer (17) which is arranged at one side of an assembly of the light guide (11) and the cladding layer (15), and which serves for providing mechanical support to both the light guide (11) and the cladding layer (15).

2. Light guide assembly (1, 2, 3, 4, 5, 6, 7, 8, 9, 10) according to claim 1, further comprising a finish layer (18) which is arranged at one side of the assembly (1, 2, 3, 4, 5, 6, 7, 8, 9, 10), and which is an outer layer of the assembly (1, 2, 3, 4, 5, 6, 7, 8, 9, 10).

3. Light guide assembly (1, 2, 3, 4, 5, 6, 7, 8, 9, 10) according to claim 1, further comprising means (19, 21, 26) for allowing light to escape from the light guide (11) at predetermined places.

4. Light guide assembly (1, 2, 4, 5, 8, 9, 10) according to claim 3, wherein a surface (14) of the light guide (11) is provided with irregularities (19).

5. Light guide assembly (3) according to claim 3, further comprising pieces (21) of a transparent material which are contacting the light guide (11) and extending from the light guide (11) to an outer side of the assembly (3), wherein the layer(s) (15, 17, 18) covering the light guide (11) at the side where the pieces (21) of the transparent material are present comprise(s) holes for accommodating these pieces (21).

6. Light guide assembly (6, 7) according to claim 3, further comprising dots (26) of a material which is in close contact with the light guide (11).

7. Light guide assembly (7) according to claim 6, wherein the dots (26) are part of one of the light guide (11) and a layer (17) which is arranged on a surface (14) of the light guide (11).

8. Light guide assembly (1) according to claim 3, further comprising a mirror (20), wherein a reflecting side of the mirror (20) faces the means (19) for allowing light to escape from the light guide (11) at predetermined places.

9. Light guide assembly (4, 10) according to claim 1, wherein the light guide (11) is provided with through-holes (23).

10. Light guide assembly (5) according to claim 1, further comprising a second light guide (24) arranged beside the other light guide (11) of the assembly (5); and means (25) for allowing light to escape from the second light guide (24) at a surface facing the other light guide (11).

11. Light guide assembly (8) according to claim 1, further comprising a collimator (28) which is part of the light guide (11), and which is arranged at a side of the light guide (11) for receiving light from a light source (27).

12. Light guide assembly (9) according to claim 1, further comprising a layer (29) for absorbing light, which is arranged at a portion of the light guide (11), particularly a portion at a side of the light guide (11) for receiving light from a light source (27).

13. Light guide assembly (10) according to claim 1, wherein the cover layer (17) is decoupled from the light guide (11) at predetermined places, wherein space is present between the light guide (11) and the cover layer (17) at those places.

14. Light emitting device, comprising a light guide assembly (1, 2, 3, 4, 5, 6, 7, 8, 9, 10) according to claim 1 and at least one light source such as a light emitting diode (27) for emitting light to the light guide (11) which is part of the light guide assembly (1, 2, 3, 4, 5, 6, 7, 8, 9, 10).

15. Product such as a domestic appliance, comprising a light emitting device according to claim 14.

## Fig. 1

## Fig. 2

## Fig. 3

# Fig. 4

# Fig. 5

# Fig. 6

Fig. 7

Fig. 8

Fig. 9

Fig. 10

Europäisches
Patentamt

European
Patent Office

Office européen
des brevets

**EUROPEAN SEARCH REPORT**

Application Number

EP 08 16 2719

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 2 626 381 A (SOLVAY [BE]) 28 July 1989 (1989-07-28) * page 1, line 24 - page 6, line 7 * | 1,3,5, 14,15 | INV. F21V8/00 |
| Y | | 2 | |
| Y | WO 2005/108861 A (LO TEDDY YEUNG MAN [CN]) 17 November 2005 (2005-11-17) * abstract * | 2 | |
| Y | US 2007/031595 A1 (FOX RICHARD B [US]) 8 February 2007 (2007-02-08) * abstract * | 2 | |
| Y | FR 2 745 113 A (ELYACOUBI CHAMARIQ MOUNA [FR]) 22 August 1997 (1997-08-22) * page 5, line 5 - line 10 * | 2 | |
| Y | US 4 991 988 A (SNELL THOMAS G [US] ET AL) 12 February 1991 (1991-02-12) * abstract * | 2 | |

TECHNICAL FIELDS
SEARCHED       (IPC)

F21V

~~The present search report has been drawn up for all claims~~

| Place of search | Date of completion of the search | Examiner |
|---|---|---|
| Munich | 19 January 2009 | Frisch, Anna Maria |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                  

& : member of the same patent family, corresponding
    document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1,2,3,5,14,15

☐ The present supplementary European search report has been drawn up for those parts of the European patent application which relate to the invention first mentioned in the claims (Rule 164 (1) EPC).

Europäisches
Patentamt
European
Patent Office
Office européen
des brevets

**LACK OF UNITY OF INVENTION
SHEET B**

Application Number

EP 08 16 2719

The Search Division considers that the present European patent application does not comply with the requirements of unity of invention and relates to several inventions or groups of inventions, namely:

1. claims: 1,2,3,5,14,15

    Subject 1 relates to a light guide assembly with core, clad, and cover layer, to a finishing layer for the soft touch, and to outcoupling structures in form of additional waveguide pieces leading through the clad.
    ---

2. claim: 4

    Subject 2 also relates to a light guide assembly with core, clad, and cover layer, and to outcoupling structures in form of irregularities on the core guide.
    ---

3. claims: 6,7

    Subject 3 also relates to a light guide assembly with core, clad, and cover layer, and to outcoupling structures in form of dots formed on the core.
    ---

4. claim: 8

    Subject 4 also relates to a light guide assembly with core, clad, and cover layer, and to outcoupling structures in the form of reflectors on sides opposite to the outcoupling side.
    ---

5. claim: 9

    Subject 5 also relates to a light guide assembly with core, clad, and cover layer, and to through holes in the light guide.
    ---

6. claim: 10

    Subject 6 also relates to a light guide assembly with core, clad, and cover layer, and to a second core waveguide coupled to the arrangement.
    ---

7. claim: 11

    Subject 7 also relates to a light guide assembly with core, clad, and cover layer, and to a collimator for coupling light into the guide.
    ---

15

Europäisches
Patentamt

European
Patent Office

Office européen
des brevets

**LACK OF UNITY OF INVENTION
SHEET B**

Application Number

EP 08 16 2719

The Search Division considers that the present European patent application does not comply with the
requirements of unity of invention and relates to several inventions or groups of inventions, namely:

8. claim: 12

Subject 8 also relates to a light guide assembly with core,
clad, and cover layer, and to an absorber layer.
---

9. claim: 13

Subject 9 also relates to a light guide assembly with core,
clad, and cover layer, and to details of the cover layer
arrangement.
---

**ANNEX TO THE EUROPEAN SEARCH REPORT**
**ON EUROPEAN PATENT APPLICATION NO.**                  EP 08 16 2719

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2009

| Patent document cited in search report | | Publication date | Patent family member(s) | | Publication date |
|---|---|---|---|---|---|
| FR 2626381 | A | 28-07-1989 | BE | 1006001 A3 | 19-04-1994 |
| | | | CH | 678574 A5 | 30-09-1991 |
| | | | ES | 2010095 A6 | 16-10-1989 |
| | | | GB | 2214326 A | 31-08-1989 |
| | | | IT | 1228237 B | 05-06-1991 |
| | | | PT | 89462 A | 04-10-1989 |
| WO 2005108861 | A | 17-11-2005 | AU | 2004290455 A1 | 10-11-2005 |
| | | | CA | 2562525 A1 | 17-11-2005 |
| | | | CN | 1751204 A | 22-03-2006 |
| | | | EP | 1658461 A1 | 24-05-2006 |
| | | | JP | 4157143 B2 | 24-09-2008 |
| | | | JP | 2006523941 T | 19-10-2006 |
| | | | RU | 2339872 C2 | 27-11-2008 |
| | | | US | 2007041174 A1 | 22-02-2007 |
| US 2007031595 | A1 | 08-02-2007 | WO | 2007019009 A2 | 15-02-2007 |
| FR 2745113 | A | 22-08-1997 | NONE | | |
| US 4991988 | A | 12-02-1991 | NONE | | |

EPO FORM P0459

For more details about this annex : see Official Journal of the European Patent Office, No. 12/82